# EUROPEAN PATENT APPLICATION

(11) **EP 4 589 471 A1**
(43) Date of publication of application: **23.07.2025**
(21) Application number: 23865427.1
(22) Date of filing: 08.09.2023
(51) Int. Cl.: G06K 19/077, B65D 25/20, G09F 3/00, G09F 3/03

(54) **TAMPER DETECTION TAG AND CONTAINER WITH TAG**

(30) Priority: 12.09.2022 JP 2022144591
(71) Applicant: Toppan Holdings Inc., Tokyo 110-0016 (JP)
(72) Inventor: HIGUCHI Noriaki, Tokyo 110-0016 (JP); NAKABAYASHI Takamitsu, Tokyo 110-0016 (JP); YAMAOKA Keinosuke, Tokyo 110-0016 (JP)
(74) Representative: Hoffmann Eitle
(86) International application number: PCT/JP2023/032884
(87) International publication number: WO 2024/058072

(57) **Abstract**

Provided is an opening detection tag to be attached to a container having a sealing portion that seals an opening of the container. The opening detection tag includes a substrate, an electrode that is disposed on the sealing portion and includes a first electrode that is provided on a front surface side of the substrate and a second electrode that is provided on a back surface side of the substrate and faces the first electrode, an antenna unit that enables contactless communication with an external device, and an IC chip that is electrically connected to the electrode and the antenna unit and measures electrostatic capacitance formed between the first electrode and the second electrode. The IC chip performs contactless communication with the external device via the antenna unit and transmits, to the external device, the electrostatic capacitance measured by the IC chip.

## Description

### [Technical Field]

The present invention relates to an opening detection tag and a tagged container.

This application claims the benefit of priority from Japanese Patent Application No. 2022-144591 filed September 12, 2022, the contents of which are incorporated herein by reference.

### [Background Art]

In recent years, counterfeit luxury liquor products and the like have appeared on the market. In particular, in the field of wine, approximately 20% of the wine sold in the world is estimated to be counterfeit. Replacement of wine in a wine bottle is performed by removing a cap seal covering a cork stopper of the wine bottle and opening the wine bottle. In recent counterfeiting, in order not to break a wine bottle or a cork stopper or a cap seal of the wine bottle, an injection needle or the like is used to open the wine bottle by tampering, and a puncture hole (injection needle hole) is formed in the cork stopper of the wine bottle and the wine is replaced with a counterfeit.

In order to detect such opening by tampering of a container such as a wine bottle, Patent Literature 1 discloses a device including an IC chip, and a network of conducting wire that is provided on a surface facing a cap seal and is electrically connected to the IC chip. In the device, when a stopper of a bottle is punctured by a user to replace the contents, the conducting wire is disconnected, and the IC chip detects electrical disconnection of the conducting wire and thereby certifies that the bottle has been opened.

### [Citation List]

### [Patent Literatures]

[PTL 1] JP 6829690 B

### [Summary of the Invention]

### [Technical Problem]

However, the authentication device described in Patent Literature 1 is a technique that determines that a bottle has been opened, in response to disconnection of a wire provided in a cap seal of the bottle, and cannot determine whether the opened state of the bottle is a state in which the bottle has been opened by tampering or a state in which the cap seal has been removed and the bottle has been opened in a normal manner.

The present invention has been made in view of the above circumstances, and an object of the present invention is to provide an opening detection tag and a tagged container capable of detecting that a hole has been formed in a sealing portion in an opening of a container and the contents of the container have been replaced by tampering.

### [Solution to Problem]

In order to solve the above problem, the present invention proposes the following solution.

An opening detection tag according to a first aspect of the present invention is an opening detection tag to be attached to a container having a sealing portion that seals an opening on an upper side of the container, the opening detection tag including a substrate having electrical insulation properties, an electrode that is disposed on an upper side of the sealing portion and includes a first electrode that is provided on a front surface side of the substrate and a second electrode that is provided on a back surface side of the substrate and faces the first electrode, an antenna unit that enables contactless communication with an external device, and an IC chip that is electrically connected to the electrode and the antenna unit and measures electrostatic capacitance formed between the first electrode and the second electrode, wherein the IC chip performs contactless communication with the external device via the antenna unit and transmits, to the external device, the electrostatic capacitance measured by the IC chip.

### [Advantageous Effects of the Invention]

The opening detection tag and the tagged container according to the present invention make it possible to provide an opening detection tag and a tagged container capable of detecting that a hole has been formed in a sealing portion in an opening of a container and the contents of the container have been replaced by tampering.

### [Brief Description of the Drawings]

Fig. 1 is a perspective view of a tagged container according to a first embodiment of the present invention.
Fig. 2 is a front view of a configuration of an opening detection tag of the tagged container in Fig. 1.
Fig. 3 is a diagram showing a configuration of the opening detection tag in Fig. 1.
Fig. 4 is an enlarged view of a region F shown in Fig. 3.
Fig. 5 is a diagram showing a state in which an injection needle hole is formed in a wine bottle of the tagged container in Fig. 1.
Fig. 6 is a diagram showing a state in which the wine bottle of the tagged container in Fig. 1 is opened from perforations of a cover.
Fig. 7 is a diagram showing a configuration of an opening detection tag of a tagged container according to a second embodiment of the present invention.
Fig. 8A is a diagram showing a modification of the opening detection tag according to the first embodiment of the present invention.
Fig. 8B is a diagram showing a modification of the opening detection tag according to the second embodiment of the present invention.
Fig. 9 is a diagram showing a configuration of an opening detection system according to a third embodiment.
Fig. 10 is a diagram showing a specific example of the content displayed by an external device.
Fig. 11 is a diagram showing a specific example of the content displayed by the external device.

### [Description of the Embodiments]

### (First embodiment)

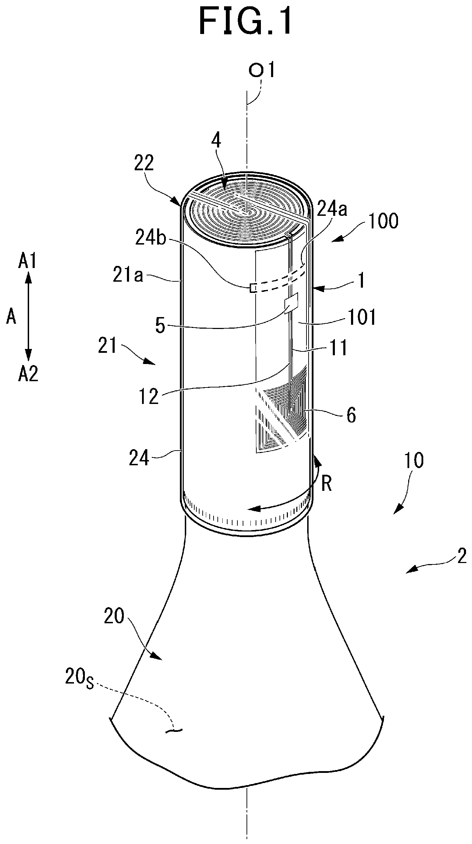

A first embodiment of the present invention will be described with reference to Figs. 1 to 8B. In the following embodiments and modifications, the corresponding components are denoted by the same reference signs, and redundant description may be omitted. Furthermore, in the following description, for example, an expression of relative or absolute arrangement such as "parallel", "orthogonal", "centered", or "coaxial" shall not be construed as indicating only the arrangement in a strict literal sense, but also includes a state where the arrangement is relatively displaced by a tolerance, or by an angle or a distance whereby it is possible to achieve the same function.

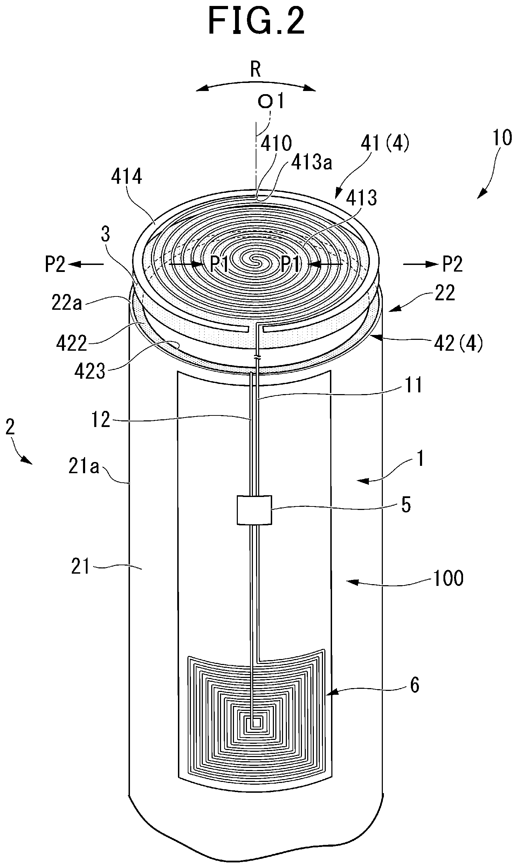

Fig. 1 is a perspective view of a tagged container 10 according to the first embodiment of the present invention. Fig. 2 is a front view of a configuration of an opening detection tag 1 of the tagged container 10.

**In** the present embodiment, the tagged container 10 is placed so that a wine bottle 2 that is a container is placed in contact with the ground. However, the tagged container 10 may be laterally placed in the process in which the tagged container 10 is stored in a wine rack or in the process in which the tagged container 10 is placed in a wooden box or the like and transferred.

**In** the following description of the tagged container 10, the longitudinal direction of the wine bottle 2 placed on the ground is referred to as a vertical direction A, the upper side of the wine bottle 2 in the vertical direction A is referred to as an upper side A1, and the lower side of the wine bottle 2 in the vertical direction A, which is the ground side, is referred to as a lower side A2.

The tagged container 10 includes the wine bottle 2, and an IC-tagged label 100 including the opening detection tag 1.

### [Wine bottle (container) 2]

The wine bottle (container) 2 may be a wine bottle having a commonly known size and shape. The wine bottle 2 has a body portion 20, a bottle neck 21, and an opening 22. The body portion 20 has a container portion 20s capable of holding the liquid contents. The bottle neck 21 extends in the vertical direction A on the upper side A1 of the body portion 20, and has a smaller outer diameter than the body portion 20. A label upper sheet 101 is attached to a side surface 21a of the bottle neck 21. The label upper sheet 101 is mounted with an IC chip 5 and an antenna unit 6 (described later). The opening 22 is provided on the upper side A1 of the bottle neck 21.

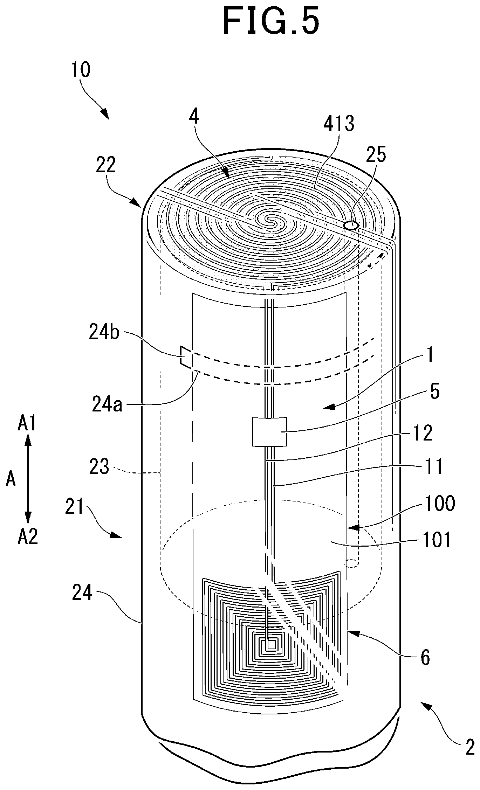

The wine bottle 2 has a central axis O1. The wine bottle 2 is formed, for example, by connecting the body portion 20, the bottle neck 21, and the opening 22 along the central axis O1 from the lower side A2 to the upper side A1 in the vertical direction A. The wine bottle 2 in an unopened state includes a cork stopper (sealing portion) 23 in the opening 22 (see Fig. 5), and the cork stopper 23 seals the opening 22. A cover (cap seal) 24 is attached to the wine bottle 2 in an unopened state so as to cover the opening 22 and the bottle neck 21 from the upper side A1.

The cover 24 has perforations 24a that extend in a circumferential direction R of the bottle neck 21 and are used to open the cover 24. A portion on one side of the perforations 24a in the circumferential direction R forms a U-shape with no perforations. A user can hold an opening portion 24b that is surrounded by the perforations 24a, and open the cover from the other side toward the one side of the perforations 24a in the circumferential direction R.

### [IC-tagged label 100]

As shown in Fig. 1, the IC-tagged label 100 is attached to the bottle neck 21 with an adhesive or the like. In the present embodiment, the IC-tagged label 100 is provided between the cover 24 and each of the opening 22 and the bottle neck 21 of the wine bottle 2; however, the IC-tagged label 100 may be provided on an outer surface of the cover 24.

The IC-tagged label 100 includes the opening detection tag 1, and the label upper sheet 101 that serves as a support of the IC-tagged label 100.

### [Opening detection tag 1]

The opening detection tag 1 is provided on the wine bottle 2. The opening detection tag 1 is, for example, a tag that performs contactless communication with a contactless external device such as a UHF or NFC-enabled smartphone or reader/writer and enables detection of opening by tampering of the wine bottle 2. The opening detection tag 1 includes a substrate 3, a front-side connection portion 11, a back-side connection portion 12, an electrode 4, the IC chip 5, and the antenna unit 6.

### [Substrate 3]

The substrate 3 is a sheet-like substrate having electrical insulation properties. As shown in Fig. 2, the substrate 3 is attached to the wine bottle 2 and provided on the upper side A1 of the cork stopper 23 (see Fig. 5) in the opening 22 so as to cover the opening 22 of the wine bottle 2. In the present embodiment, the thickness direction of the substrate 3 coincides with the vertical direction A. Thus, the front surface side of the substrate 3 is the upper side A1, and the back surface side of the substrate 3 is the lower side A2. The substrate 3 has substantially the same size as a periphery 22a of the opening 22 as viewed from the upper side A1 in the vertical direction A, and has a circular shape around a central axis extending in the vertical direction A. The central axis of the substrate 3 coincides with the central axis O1. The substrate 3 serves as a support of the electrode 4 (described later). The substrate 3 may be integrally formed with the label upper sheet 101 (described later). In the following description, the side facing the central axis O1 is referred to as an inner peripheral side P1, and the side opposite to the inner peripheral side P1 is referred to as an outer peripheral side P2.

In the present embodiment, the substrate 3 is composed of, for example, a PET substrate. However, the material of the substrate 3 is not specifically limited, and may be, for example, glass epoxy or a paper base, or may be a substrate composed of a combination of a plurality of materials. The substrate 3 composed of a paper base achieves lower environmental load. The substrate 3 may be transparent or opaque. When the substrate 3 is opaque, a needle detection unit 413 of the electrode 4 (described later) is hidden and the specific position of the needle detection unit 413 cannot be seen, thus making it difficult for a user to insert a needle while avoiding the needle detection unit 413.

### [Front-side connection portion 11]

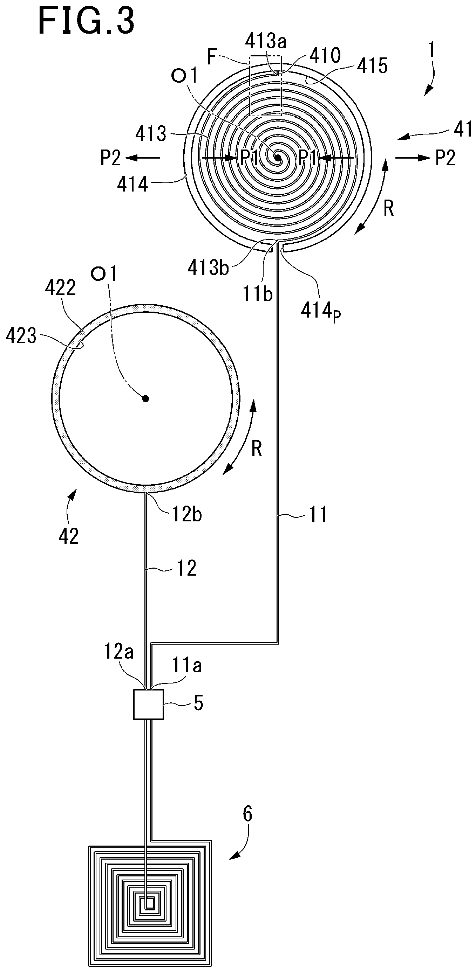

As shown in Fig. 2, the front-side connection portion 11 electrically connects the IC chip 5 to a first electrode 41 (described later). The front-side connection portion 11 is a conducting wire that extends from a base end portion 11a connected to the IC chip 5 to a tip end portion 11b connected to the first electrode 41 (see Fig. 3). As shown in Fig. 1, the front-side connection portion 11 extends across the opening portion 24b of the cover 24. The front-side connection portion 11 is attached to the cover 24 with a bonding force larger than the tensile shear force of the front-side connection portion 11. Thus, when the opening portion 24b is opened by a user, the front-side connection portion 11 is disconnected.

### [Back-side connection portion 12]

As shown in Fig. 2, the back-side connection portion 12 electrically connects the IC chip 5 to a second electrode 42 (described later). The back-side connection portion 12 is a conducting wire that extends substantially parallel to the vertical direction A so as to be adjacent to the front-side connection portion 11. The back-side connection portion 12 extends from a base end portion 12a connected to the IC chip 5 to a tip end portion 12b connected to the second electrode 42. As shown in Fig. 1, as with the front-side connection portion 11, the back-side connection portion 12 extends across the opening portion 24b of the cover 24. The back-side connection portion 12 is attached to the cover 24 with a bonding force larger than the tensile shear force of the front-side connection portion 11. Thus, when the opening portion 24b is opened by a user, the back-side connection portion 12 is disconnected.

### [Electrode 4]

As shown in Fig. 2, the electrode 4 is provided on the front and back (the upper side A1 and the lower side A2) of the substrate 3. As with the substrate 3, the electrode 4 is provided on the upper side A1 of the cork stopper 23. The electrode 4 includes a detection unit that detects opening by tampering of the wine bottle 2 performed by inserting a tool such as an injection needle from the upper side A1 of the wine bottle 2. The electrode 4 may be manufactured, for example, by laser cutting or punching a metal plate or a metal foil, etching a metal foil or a metal layer, placing a metal wire (conducting wire), or the like. The electrode 4 includes the first electrode 41 and the second electrode 42.

### [First electrode 41]

Fig. 3 is a diagram showing a configuration of the opening detection tag 1. In Fig. 2, for convenience of description, the substrate 3 is not shown, and the front-side connection portion 11 and the back-side connection portion 12 are shown in a different form.

The first electrode 41 is a linear electrode provided on the upper side A1, which is the front surface side of the substrate 3. The first electrode 41 is composed of a conducting wire wound in a circular shape around the central axis O1, and has substantially the same outer diameter as the substrate 3 as viewed from the upper side A1 in the vertical direction A.
The first electrode 41 includes the needle detection unit 413, a first peripheral electrode portion 414, and a first electrode connection portion 410.

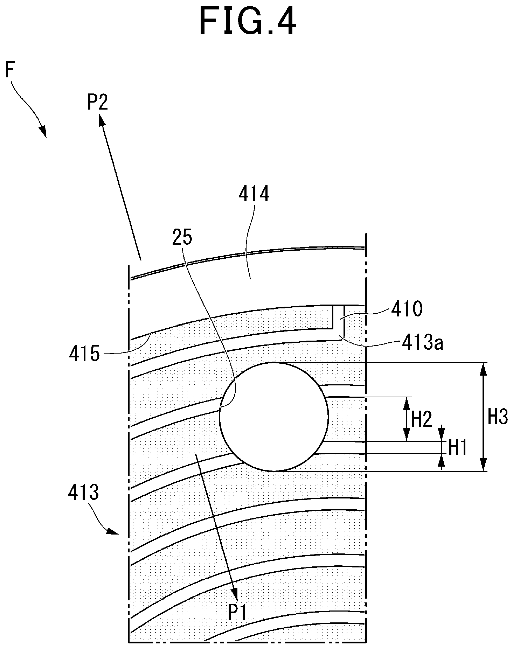

The needle detection unit 413 detects that the cork stopper 23 is punctured with an injection needle or the like by a user. As shown in Fig. 3, the needle detection unit 413 is a portion of the first electrode 41 that is composed of a single conducting wire extending in a unicursal manner without intersecting. In the present embodiment, the conducting wire of the needle detection unit 413 has a uniform pattern width H1 (see Fig. 4).

The needle detection unit 413 is provided in a region that overlaps with at least the opening 22 as viewed in the vertical direction A, and is located at a position closer to the inner peripheral side P1 than the periphery 22a of the opening 22. The needle detection unit 413 is wound in a circular shape with two or more turns to form a spiral shape. Specifically, the needle detection unit 413 is wound to one side in the circumferential direction of the substrate 3 in a spiral shape from a base end 413b connected to the front-side connection portion 11 toward the inner peripheral side P1. The circumferential direction of the substrate 3 coincides with the circumferential direction R. Then, the needle detection unit 413 is bent near the central axis O1 and wound to the other side in the circumferential direction R in a spiral shape toward the outer peripheral side P2, and a tip end 413a of the needle detection unit 413 is connected to the first peripheral electrode portion 414 via the first electrode connection portion 410. In this case, the needle detection unit 413 is composed of a single conducting wire extending in a unicursal manner without intersecting or branching.

Fig. 4 is an enlarged view of a region F shown in Fig. 3.

As shown in Fig. 4, for example, a width H2 represents the width between two adjacent linear portions of the conducting wire of the needle detection unit 413. The pattern width **H1** and the width H2 of the conducting wire of the needle detection unit 413 are each set to be 0.3 mm or less.

For example, when the cork stopper 23 of the wine bottle 2 is punctured with an injection needle, an injection needle hole 25 having a diameter H3 is formed in the cork stopper 23 by the injection needle. When an injection needle having an outer diameter of 1 mm is used, the diameter H3 is approximately 1 mm. The width **H1** and the width H2 are each set to be 0.3 mm or less; thus, the conducting wire of the needle detection unit 413 is reliably disconnected.

The cork stopper 23 typically has a length of approximately 30 mm from the uppermost portion of the opening 22 of the wine bottle 2 to the bottom portion of the wine bottle 2. It is difficult for a user to puncture the cork stopper 23 having such a length, for example, with a thin injection needle having a diameter of 1 mm or less and penetrate the cork stopper 23 to a depth of 30 mm. Thus, the width **H1** and the width H2 set to be 0.3 mm or less allows the needle detection unit 413 to detect puncturing of the cork stopper 23 with an injection needle by a user, regardless of the portion of the opening 22 at which the cork stopper 23 is punctured with the injection needle.

Needle gauge standards are set for the injection needle width. For example, the standards for an injection needle made of stainless steel SUS316 include an outer diameter of 0.10 ±0.02 mm to 2.70 ±0.03 mm. The inner diameter corresponding to the above outer diameter is 0.03 ±0.02 mm to 2.40 ±0.03 mm. Needles used for blood transfusion have, for example, an outer diameter of 1.20 mm and an inner diameter of 0.94 mm. When the width of needles is reduced, the cross-sectional area of the needles is sharply reduced.
For example, when the cross-sectional area of the inner diameter of a needle having an outer diameter of 1.20 mm is 100%, the cross-sectional area of the inner diameter of a needle having an outer diameter of 1.08 mm is 76%; however, the cross-sectional area of the inner diameter of a needle having an outer diameter of 0.51 mm is 9%, and the cross-sectional area of the inner diameter of a needle having an outer diameter of 0.10 mm is 0.1%. Thus, the strength of a needle having an outer diameter of 1 mm or less is insufficient to puncture the cork stopper 23, and furthermore, it is difficult for such a needle to ensure appropriate flow rate.

The first peripheral electrode portion 414 is an electrode that has substantially the same size and shape as the periphery 22a of the opening 22 of the wine bottle 2 as viewed from the upper side A1 in the vertical direction A, and has an arc shape around the central axis O1. The first peripheral electrode portion 414 is designed not to protrude from the periphery 22a toward the outer peripheral side P2 as viewed in the vertical direction A. Furthermore, the first peripheral electrode portion 414 does not overlap with the opening 22 as viewed in the vertical direction A. The first peripheral electrode portion 414 has a through hole 415 in the center. The size of the through hole 415 is the same as the inner diameter of the opening 22. The first peripheral electrode portion 414 having an arc shape has a gap 414p near the intersection of the first peripheral electrode portion 414 and the front-side connection portion 11. The front-side connection portion 11 passes through the gap 414p without being electrically connected to the first peripheral electrode portion 414, and electrically connects the IC chip 5 provided on the outer peripheral side P2 of the first peripheral electrode portion 414 to the needle detection unit 413 provided on the inner peripheral side P1 of the first peripheral electrode portion 414. The size and shape of the first peripheral electrode portion 414 are not limited to those of the present embodiment. The first peripheral electrode portion 414 may protrude from the periphery 22a toward the outer peripheral side P2 or overlap with the opening 22 as viewed from the upper side A1 in the vertical direction A.

The conducting wire of the first peripheral electrode portion 414 has a wider (larger) pattern width than the conducting wire of the needle detection unit 413. Thus, when the conducting wire of the needle detection unit 413 is disconnected by an injection needle and there is no electricity flowing through the first peripheral electrode portion 414, it is possible to cause a larger loss of the area that produces electrostatic capacitance, leading to a larger change in electrostatic capacitance.

The first electrode connection portion 410 electrically connects the needle detection unit 413 to the first peripheral electrode portion 414. The first electrode connection portion 410 is not an essential component, and the first electrode 41 may not necessarily include the first electrode connection portion 410 when the needle detection unit 413 is directly connected to the first peripheral electrode portion 414.

### [Second electrode 42]

The second electrode 42 is an electrode that has an annular shape around the central axis O1 and is provided on the lower side A2, which is the back surface side of the substrate 3. The second electrode 42 has substantially the same outer diameter as the first electrode 41 as viewed from the upper side A1 in the vertical direction A. The second electrode 42 includes a second peripheral electrode portion 422. The term substantially the same outer diameter means the same dimension in the vertical direction A and in a direction perpendicular to the vertical direction A.

The second peripheral electrode portion 422 is an annular electrode that has substantially the same size and shape as the first peripheral electrode portion 414 as viewed from the upper side A1 in the vertical direction A, and has a through hole 423 in the center. The second peripheral electrode portion 422 faces the first peripheral electrode portion 414 with the substrate 3 therebetween. The size of the through hole 423 is the same as the inner diameter of the opening 22. The second peripheral electrode portion 422 is electrically connected to the IC chip 5 by the back-side connection portion 12.

In the electrode 4, due to a high-frequency electromagnetic field generated by a transmission/reception circuit of a contactless external device (not shown), induction of a high-frequency voltage in the antenna unit 6 (described later) leads to voltage application, producing electrostatic capacitance between the first electrode 41 and the second electrode 42.

### [IC chip 5]

The IC chip 5 is attached to the side surface 21a of the bottle neck 21, and is connected to both the first electrode 41 and the second electrode 42. The IC chip 5 communicates with an external device via the antenna unit 6, and implements a wireless communication function of the opening detection tag 1. Specifically, power is supplied to the IC chip 5 via the antenna unit 6. Then, the IC chip 5 can receive a command from the external device and respond to the command through wireless communication.

In the present embodiment, the IC chip 5 has a function of receiving a command from an external device and measuring the electrostatic capacitance produced between the first electrode 41 and the second electrode 42. Furthermore, the IC chip 5 can transmit the measured electrostatic capacitance to the external device through wireless communication.

The IC chip 5 can receive a command from an external device, and distinguish and detect the opened state based on variation in the electrostatic capacitance produced between the first electrode 41 and the second electrode 42. Specifically, the IC chip 5 can distinguish between a state in which the conducting wire of the needle detection unit 413 is disconnected and thus the electrostatic capacitance is reduced and a state in which the front-side connection portion 11 and the back-side connection portion 12 are disconnected and thus there is no electricity flowing through the electrodes and the measurement value of the electrostatic capacitance is 0 (zero). This effect will be described in detail later.

For example, the IC chip 5 can store information on the electrostatic capacitance in an unopened state, and detect that the wine bottle 2 is in an opened state when the electrostatic capacitance measured in response to a command received from an external device has been changed from the electrostatic capacitance in an unopened state. The IC chip 5 may not necessarily store information on the electrostatic capacitance in an unopened state. In such a case, the external device may store, in an application, information on the electrostatic capacitance in an unopened state, and detect that the wine bottle 2 is in an opened state when the electrostatic capacitance acquired from the IC chip 5 through wireless communication has been changed.

The IC chip 5 may further have a function of receiving commands from an external device and detecting disconnection of the conducting wire of the first electrode 41 or the second electrode 42, or measuring the electrical resistance value of the conducting wire of the first electrode 41 or the second electrode 42. In such a case, the IC chip 5 can detect disconnection of the conducting wire or measure the electrical resistance value of the conducting wire and transmit the results to the external device through wireless communication.

The IC chip 5 may store information on the contents and identification information on the wine bottle 2 to which the IC chip 5 is attached. In such a case, the IC chip 5 can transmit the information on the contents and the identification information to an external device. Furthermore, the external device may add or update information in the IC chip 5. The placement position of the IC chip 5 is not specifically limited, and the IC chip 5 may be placed at a distance from the opening 22 of the wine bottle 2.

### [Antenna unit 6]

The antenna unit 6 is attached to the side surface 21a of the bottle neck 21. The antenna unit 6 is a loop-shaped conductor connected to the IC chip 5. The antenna unit 6 may be a conventionally known antenna, and is, for example, designed to have a length and a pattern width that enable operation in the UHF band or the HF band. The placement position of the antenna unit 6 is not specifically limited, and the antenna unit 6 may be placed at a distance from the opening 22 of the wine bottle 2.

The antenna unit 6 enables contactless communication with a contactless external device such as a reader/writer or a mobile phone. When the IC chip 5 communicates with an external device via the antenna unit 6, through communication, power is supplied to the IC chip 5, and the IC chip 5 can receive a command from the external device and respond to the command.

In the present embodiment, a base end portion and a tip end portion of the antenna unit 6 are each connected to the IC chip 5 by a jumper wire on the surface of the label upper sheet 101; however, the connection of the base end portion and the tip end portion of the antenna unit 6 is not specifically limited, and the base end portion and the tip end portion may be crimped or have a through hole and be connected using a wiring circuit provided on the back surface of the label upper sheet 101.

### [Label upper sheet 101]

The label upper sheet 101 is composed of sheet paper, and as shown in Figs. 1 and 2, has a rectangular shape with long sides facing each other and short sides facing each other on the side surface 21a of the bottle neck 21. In the present embodiment, the opening detection tag 1 is provided between the bottle neck 21 and the cover 24 of the wine bottle 2 (see Fig. 1); however, the opening detection tag 1 may be provided on the outer surface of the cover 24. The label upper sheet 101 is preferably flexible to be able to be attached to the side surface 21a of the bottle neck 21 of the wine bottle 2 along the curved side surface 21a. As shown in Fig. 1, the label upper sheet 101 is bent along the curved shape of the side surface 21a of the bottle neck 21; however, the label upper sheet 101 may be provided along a tangent plane to part of the side surface 21a of the bottle neck 21. The label upper sheet 101 may be transparent or opaque.

The label upper sheet 101 is attached to the wine bottle 2 with an adhesive or the like. The adhesive may be provided on the back surface of the label upper sheet 101 on the inner peripheral side P1. Alternatively, the adhesive may be applied to the front surface of the label upper sheet 101 on the outer peripheral side P2 or the side surface 21a of the bottle neck 21 when the IC-tagged label 100 is attached to the wine bottle 2, and the IC-tagged label 100 may be attached to the surface to which the adhesive is applied. The label upper sheet 101 may not necessarily include an adhesive, and may be held between the bottle neck 21 and the cover 24 of the wine bottle 2. The label upper sheet 101 is mounted with the IC chip 5 and the antenna unit 6 of the opening detection tag 1. However, the label upper sheet 101 may be further mounted with the substrate 3 and the electrode 4. In such a case, an upper portion of the label upper sheet 101 on the upper side A1 is bent to cover the opening 22 of the wine bottle 2 and attached to a portion of the wine bottle 2 on the upper side A1. The label upper sheet 101 may be integrally formed with the substrate 3.

### (Effects)

Next, effects of the tagged container 10 will be described.

The tagged container 10 is formed by first attaching the IC-tagged label 100 to the bottle neck 21 of the wine bottle 2 with an adhesive or the like, and then covering the wine bottle 2 with the cover 24. The adhesive applied to the label upper sheet 101 of the IC-tagged label 100 may be provided on the bottle neck 21, on the inner surface of the label upper sheet 101 on the inner peripheral side P1 or the outer surface of the label upper sheet 101 on the outer peripheral side P2, or on the cover 24 of the wine bottle 2. The substrate 3 and the electrode 4 of the opening detection tag 1 of the IC-tagged label 100 are provided on the upper side A1 of the cork stopper 23 so as to cover the opening 22 of the wine bottle 2.

Then, the wine bottle 2 in an unopened state can be opened and the contents can be extracted. The opened state is classified into, for example, a state in which the wine bottle 2 has been opened by tampering using an injection needle (hereinafter tampered open state) and a state in which the wine bottle 2 has been opened in a normal manner (hereinafter normal open state).

### [Tampered open state]

First, effects of the tagged container 10 in a tampered open state will be described.

Fig. 5 is a diagram showing a state in which the injection needle hole 25 is formed in the wine bottle 2 of the tagged container 10. A user punctures the cork stopper 23 using an injection needle, and replaces, by tampering, wine that is the contents contained in the container portion of the wine bottle 2. The state of the wine bottle 2 in this case is referred to as a tampered open state. In this case, the cork stopper 23 is punctured with an injection needle or the like, and the injection needle hole 25 is formed.

As shown in Fig. 5, the conducting wire of the needle detection unit 413 is disconnected by the injection needle hole 25. Then, a portion of the conducting wire from the disconnected portion to the tip end 413a of the needle detection unit 413 is electrically disconnected from the IC chip 5. Furthermore, the first peripheral electrode portion 414 connected to the tip end 413a is also electrically disconnected from the IC chip 5. Thus, the area of portions of the needle detection unit 413 and the first peripheral electrode portion 414 electrically connected is reduced, and the electrostatic capacitance produced between the first electrode 41 and the second electrode 42 is smaller than in the wine bottle 2 in an unopened state in which the conducting wire of the needle detection unit 413 is not disconnected.
However, the first electrode 41 and the second electrode 42 remain connected to the IC chip 5; thus, the measured value of the electrostatic capacitance is not 0(zero).

When a user brings an external device closer to the opening detection tag 1 provided on the side surface of the wine bottle 2 of the tagged container 10, the IC chip 5 of the opening detection tag 1 communicates with the external device via the antenna unit 6. The IC chip 5 receives a command from the external device, and measures the electrostatic capacitance produced between the first electrode 41 and the second electrode 42.

For example, in the case where the IC chip 5 stores information on the electrostatic capacitance in an unopened state, in a tampered open state, the IC chip 5 detects that the wine bottle 2 is in an opened state based on the measured electrostatic capacitance having changed from the electrostatic capacitance in an unopened state. Furthermore, the IC chip 5 can detect that the wine bottle 2 is in a tampered open state based on the measured electrostatic capacitance being smaller than the electrostatic capacitance in an unopened state and the measured value of the electrostatic capacitance being not 0(zero). The external device may store, in an application, information on the electrostatic capacitance in an unopened state, and detect that the wine bottle 2 is in a tampered open state based on the electrostatic capacitance acquired from the IC chip 5 through wireless communication being smaller than the electrostatic capacitance in an unopened state and the measured value being not 0(zero).

### [Normal open state]

Next, effects of the tagged container 10 in a normal open state will be described.

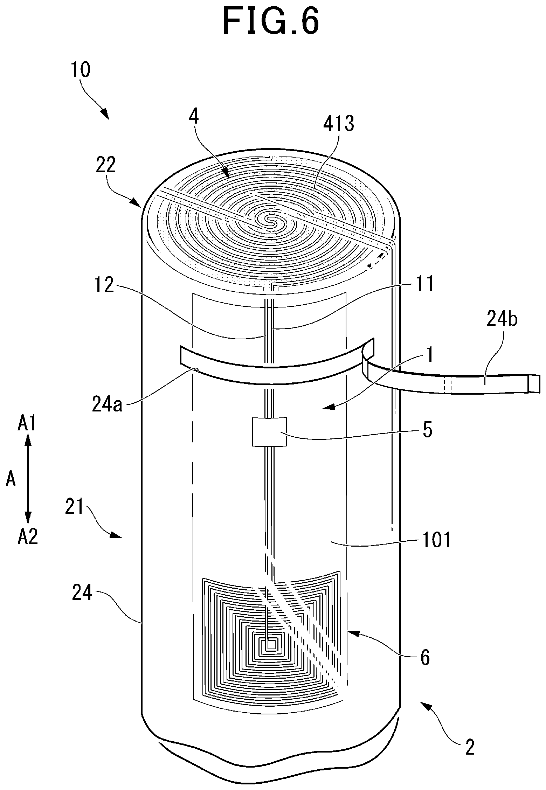

Fig. 6 is a diagram showing a state in which the wine bottle 2 of the tagged container 10 is opened from the perforations 24a of the cover 24. A user holds the opening portion 24b surrounded by the perforations 24a, and opens the cover 24. The state of the wine bottle 2 in this case is referred to as a normal open state.

When the opening portion 24b is opened by a user, the front-side connection portion 11 that connects the IC chip 5 to the first electrode 41 and the back-side connection portion 12 that connects the IC chip 5 to the second electrode 42 are disconnected. Then, the first electrode 41 and the second electrode 42 are separated from the IC chip 5. Thus, no current flows through the first electrode 41 or the second electrode 42. The electrostatic capacitance produced between the first electrode 41 and the second electrode 42 is smaller than in a tampered open state, and the measured value of the electrostatic capacitance is 0(zero).

When a user brings an external device closer to the opening detection tag 1 provided on the side surface of the wine bottle 2 of the tagged container 10, the IC chip 5 of the opening detection tag 1 communicates with the external device via the antenna unit 6. The IC chip 5 receives a command from the external device, and measures the electrostatic capacitance produced between the first electrode 41 and the second electrode 42.

For example, in the case where the IC chip 5 stores information on the electrostatic capacitance in an unopened state, in a normal open state, the IC chip 5 detects that the wine bottle 2 is in an opened state based on the measured electrostatic capacitance having changed from the electrostatic capacitance in an unopened state. Furthermore, the IC chip 5 can detect that the wine bottle 2 is in a normal open state based on the measured electrostatic capacitance being smaller than the electrostatic capacitance in an unopened state and the measured value of the electrostatic capacitance being 0(zero). The external device may store, in an application, information on the electrostatic capacitance in an unopened state, and detect that the wine bottle 2 is in a normal open state based on the electrostatic capacitance acquired from the IC chip 5 through wireless communication being smaller than the electrostatic capacitance in an unopened state and the measured value being 0(zero).

In the present embodiment, the opening detection tag 1 includes the electrode 4, and the IC chip 5 can measure the electrostatic capacitance between the first electrode 41 and the second electrode 42 of the electrode 4. Thus, the IC chip 5 can detect opening of the wine bottle 2.

In the present embodiment, the IC chip of the opening detection tag 1 can measure the electrostatic capacitance between the first electrode 41 and the second electrode 42 of the electrode 4. Thus, the IC chip 5 can store information on the electrostatic capacitance in an unopened state, and detect whether the opened state of the wine bottle 2 is the tampered open state or the normal open state.

In the present embodiment, the first electrode 41 and the second electrode 42 have the same size. Thus, for example, when part of the first electrode 41 or the second electrode 42 is electrically disconnected from the IC chip 5, it is possible to cause a larger change in the electrostatic capacitance between the first electrode 41 and the second electrode 42, allowing the IC chip 5 to achieve detection of opening with higher accuracy.

In the present embodiment, the needle detection unit 413 of the first electrode 41 is composed of a single conducting wire extending in a unicursal manner without intersecting. Thus, in a tampered open state, by causing disconnection of the conducting wire of the needle detection unit 413, the area of the first electrode 41 that produces electrostatic capacitance can be reduced. That is, it is possible to cause a larger change in electrostatic capacitance when the state of the wine bottle 2 is changed from the unopened state to the tampered open state, allowing the IC chip to achieve detection of opening with higher accuracy.

In the present embodiment, the needle detection unit 413 is provided in a region that overlaps with at least the opening 22 as viewed in the vertical direction A. Thus, the IC chip 5 can detect that an injection needle has been inserted into the opening 22 by a user and the wine bottle 2 has been opened by tampering.

In the present embodiment, the needle detection unit 413 is composed of a conducting wire wound in a spiral shape. Thus, the needle detection unit 413 can cover the opening 22 in a unicursal manner and efficiently have a large area.

In the present embodiment, the pattern width H1 of the conducting wire of the needle detection unit 413 and the width H2 between two adjacent linear portions of the conducting wire are each 0.3 mm or less. Thus, when the cork stopper 23 is punctured with an injection needle by a user, the needle can be reliably detected.

The first embodiment of the present invention has been described in detail with reference to the drawings; however, specific configurations of the present invention are not limited to this embodiment, and also include design changes within the scope not departing from the gist of the present invention. The components described in the above embodiment and the following modifications can be appropriately combined.

### (Second embodiment)

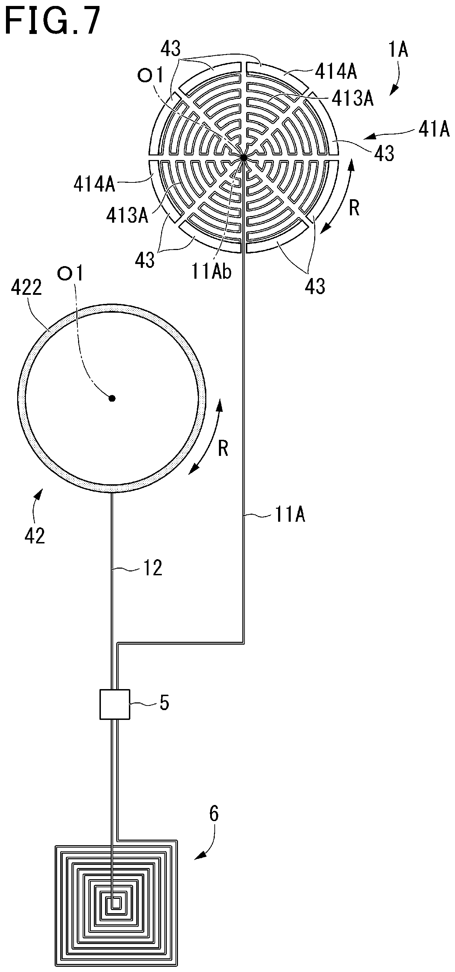

Next, a second embodiment of the present invention will be described with reference to Fig. 7. In the following description, components common to the members already described are denoted by the same reference signs, and redundant description is omitted. The following embodiments are different from the first embodiment in front-side connection portion and first electrode. Thus, in the following description, differences from the first embodiment will be mainly described.

Fig. 7 is a diagram showing a configuration of an opening detection tag 1A of a tagged container according to the second embodiment of the present invention.

A front-side connection portion 11A extends from the IC chip 5 to the central axis O1 of a first electrode 41A. A base end portion 11Ab of the front-side connection portion 11A is disposed at the same position as the central axis O1 as viewed in the vertical direction A.

The first electrode 41A includes a plurality of third electrodes 43. In the present embodiment, the center of the third electrodes 43 is located on the central axis O1, and the third electrodes 43 each have a fan shape with substantially the same radius as the opening 22.

The first electrode 41A includes, for example, six third electrodes 43, and the third electrodes 43 are arranged in a circular shape so that the gap between the third electrodes 43 is 0.3 mm or less. Each of the third electrodes 43 includes a needle detection unit 413A and a first peripheral electrode portion 414A.

Each of the needle detection units 413A is composed of a conducting wire bent a plurality of times in a zigzag shape (meandering shape) so that the length of linear portions of the conducting wire is increased from the base end portion 11Ab of the front-side connection portion 11A on the central axis O1 toward the outer peripheral side P2, forming a fan shape as a whole. The needle detection units 413A are arranged so as not to overlap with each other, and are composed of a single conducting wire extending in a unicursal manner without intersecting or branching in a region that overlaps with at least the opening 22 as viewed in the vertical direction A.

The first peripheral electrode portions 414A are electrically connected to the needle detection units 413A. The first peripheral electrode portions 414A each have substantially the same radius as the opening 22, and have an arc shape around the central axis O1.

In the present embodiment, in a tampered open state, regardless of the portion of the cork stopper 23 punctured with an injection needle by a user, at least one of the third electrodes 43 having a fan shape is disconnected. Thus, the IC chip 5 can store information on the electrostatic capacitance in an unopened state, and measure the difference in electrostatic capacitance for the area of the third electrodes 43 and detect opening by tampering.

The second embodiment of the present invention has been described in detail with reference to the drawings; however, specific configurations of the present invention are not limited to this embodiment, and also include design changes within the scope not departing from the gist of the present invention. The components described in the above embodiment and the following modifications can be appropriately combined.

### (Modifications)

The front and back of the substrate 3 to which the first electrode 41 and the second electrode 42 of the opening detection tag 1 according to the above embodiments are attached may be reversed. In other words, the first electrode 41 may be provided on the lower side A2, which is the back surface side of the substrate 3, and the second electrode 42 may be provided on the upper side A1, which is the front surface side of the substrate 3.

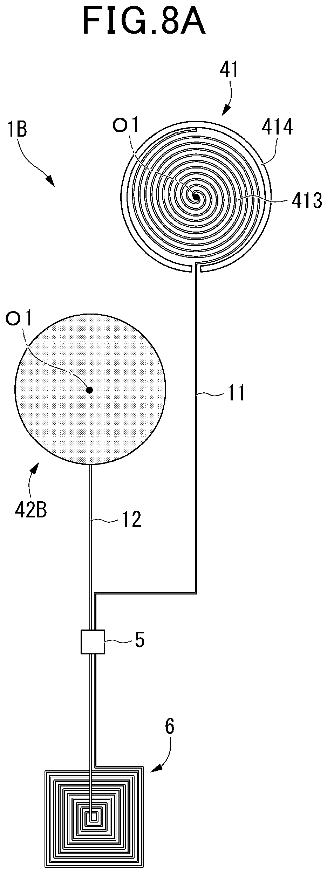

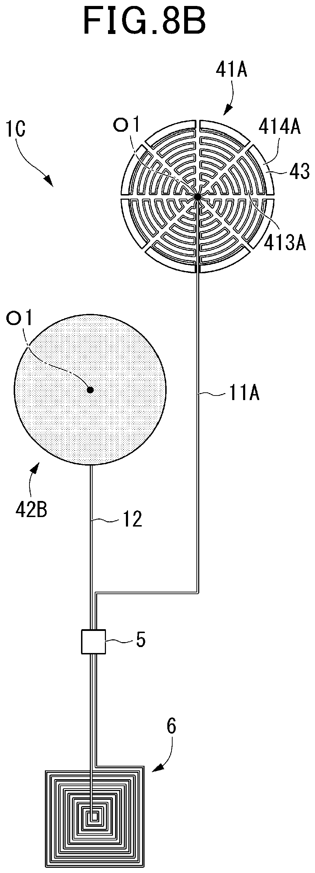

The second peripheral electrode portion of the second electrode 42 according to the above embodiments may not necessarily have an annular shape. For example, as in an opening detection tag 1B shown in Fig. 8A or an opening detection tag 1C shown in Fig. 8B, a second peripheral electrode portion 42B may have a disk shape with no through hole and be connected to the IC chip 5 via the back-side connection portion 12.

### (Third embodiment)

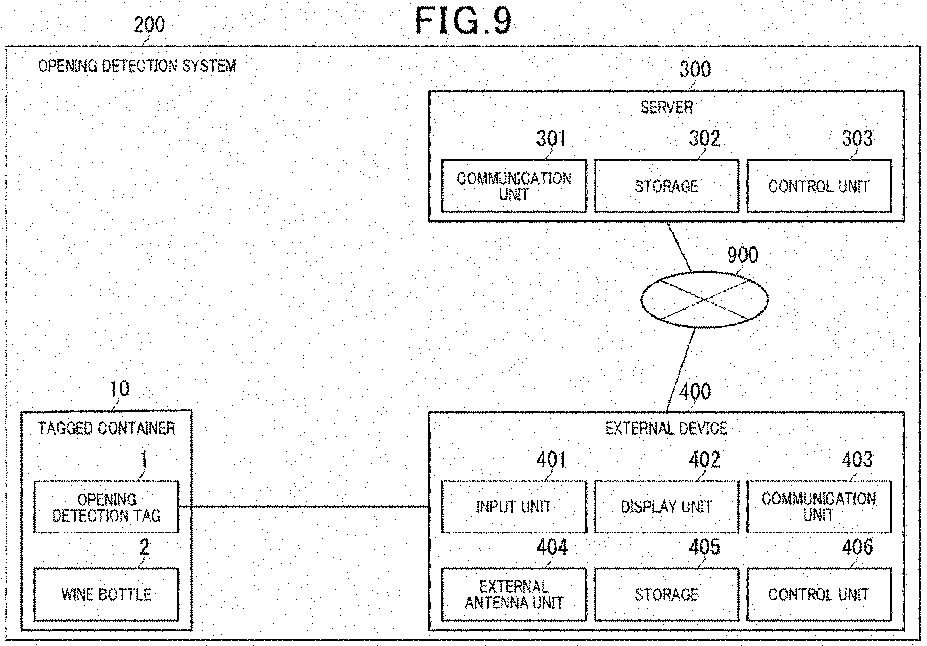

Next, a third embodiment of the present invention will be described with reference to Fig. 9. In the following description, components common to the members already described are denoted by the same reference signs, and redundant description is omitted. The following embodiments are different from the first embodiment in that the embodiments are configured as an opening detection system including a server and an external device. Thus, in the following description, differences from the first embodiment will be mainly described.

### [Opening detection system 200]

Fig. 9 is a diagram showing a configuration of an opening detection system 200 according to the third embodiment.

The opening detection system 200 according to the third embodiment includes the tagged container 10 according to the first embodiment, a server 300, and a contactless external device 400.

### [Tagged container 10]

The tagged container according to the first embodiment is used as the tagged container 10. The tagged container 10 includes the opening detection tag 1. The IC chip 5 of the opening detection tag 1 can perform transmission and reception between the external device 400 and the IC chip 5 via the antenna unit 6.

### [Server 300]

The server 300 is an information processing device capable of performing communication. The server 300 is operated according to a request transmitted from the external device 400. The server 300 includes a communication unit 301, a storage 302, and a control unit 303.

The communication unit 301 is a communication interface. The communication unit 301 communicates with the external device 400 via a network 900. The communication unit 301 may be, for example, a device that communicates, using a predetermined protocol such as a wired LAN, with a router connected to the Internet.
The communication unit 301 may be, for example, a device that communicates, using a predetermined protocol such as a wireless LAN, with an access point connected to the Internet.

The storage 302 is composed of a storage device such as a magnetic hard disk device or a semiconductor storage device. The storage 302 stores program data on an application operated in the server 300. The storage 302 may store data to be transmitted to another external device via the communication unit 301.

The control unit 303 is composed of a processor such as a CPU. The processor executes a program stored in the storage 302 to cause the control unit 303 to function.

### [External device 400]

The external device 400 is, for example, a communication terminal device that a user can carry. The external device 400 is, for example, a device such as a mobile phone such as a smartphone, a tablet terminal, a portable personal computer, or a wearable terminal. The external device 400 can perform contactless communication with the tagged container 10. The external device 400 includes an input unit 401, a display unit 402, a communication unit 403, an external antenna unit 404, a storage 405, and a control unit 406.

The input unit 401 is composed of an existing input device such as a keyboard, a pointing device (mouse, tablet, or the like), a button, or a touch panel. The input unit is operated by the user to input user instructions to the mobile terminal device. The input unit may be an interface for connecting the input device to the external device 400.

The display unit 402 is an image display device such as a CRT (cathode ray tube) display, a liquid crystal display, or an organic EL (electro luminescence) display. The display unit 402 displays data information. The display unit 402 may be an interface for connecting the image display device to the external device 400.

The communication unit 403 is a communication interface. The communication unit 403 communicates with the server 300 via the network 900. The communication unit 403 may be, for example, a device that wirelessly communicates, using a predetermined protocol, with a base station provided in a mobile communication network. The communication unit 403 may be, for example, a device that communicates, using a predetermined protocol such as a wireless LAN (local area network), with an access point connected to the Internet.

The external antenna unit 404 is a communication interface. The external antenna unit 404 wirelessly communicates with the antenna unit 6 of the opening detection tag 1 of the tagged container 10, for example, through NFC (near field communication).

The storage 405 is composed of a storage device such as a magnetic hard disk device or a semiconductor storage device. The storage 405 stores, for example, program data on an application operated in the external device 400. The storage 405 may further store another type of information.

The control unit 406 is composed of a processor such as a CPU (central processing unit). The processor executes a program stored in the storage 405 to implement the function of the control unit 406.

Next, effects of the opening detection system 200 will be described.

The opening detection system 200 according to the present embodiment has an effect in both an offline state and an online state. The offline state is a state in which the external device 400 is not communicating with the server 300 via the network 900. The online state is a state in which the external device 400 can communicate with the server 300 via the network 900.

A user operates the external device 400 that the user carries, and installs a predetermined application in advance on the external device 400. **In** the application, information on the electrostatic capacitance in an unopened state or detailed information (e.g., production place, year, or the like) on the contents (wine) of specific identification information, or other types of information may be registered in advance by user operation.

### [Offline state]

First, an effect of the opening detection system 200 in an offline state will be described.

The user holds the external device 400, and brings the external antenna unit 404 (external device 400) closer to the antenna unit 6 of the opening detection tag 1. Then, power is supplied to the IC chip 5 of the opening detection tag 1 via the antenna unit 6, and the IC chip 5 can measure the electrostatic capacitance between the first electrode 41 and the second electrode 42, and transmit information on the measured value to the external device 400. Furthermore, the IC chip 5 can transmit the identification information on the wine bottle 2 to the external device 400. The external device 400 stores the acquired information in the storage 405.

In the case where the IC chip 5 of the opening detection tag 1 stores information on the electrostatic capacitance in an unopened state, the IC chip 5 can detect whether the opened state of the wine bottle 2 is the tampered open state or the normal open state, and transmit the detection information to the external device 400. In the case where the external device 400 stores, in the application, information on the electrostatic capacitance in an unopened state, the IC chip 5 transmits the measured value of the electrostatic capacitance to the external device 400. The external device 400 can detect, based on the measured value, whether the opened state of the wine bottle 2 is the tampered open state or the normal open state, and generate detection information.

The user can check the detection information through the application. Specifically, when the wine bottle 2 is in an unopened state, the control unit 406 causes the display unit 402 of the external device 400 to display that the electrostatic capacitance measured by the IC chip 5 is in an unopened state. The user can check the display unit 402 to confirm that the wine bottle 2 is in an unopened state. Thus, the user can sell or store the wine bottle 2 without anxiety. When the wine bottle 2 is in a tampered open state, the control unit 406 causes the display unit 402 of the external device 400 to display that the wine bottle 2 has been opened by tampering. The user can check the display unit 402 to confirm that the wine bottle 2 has been opened by tampering. Furthermore, when the wine bottle 2 is in a normal open state, the control unit 406 causes the display unit 402 of the external device 400 to display that the wine bottle 2 has been opened in a normal manner. The user can use the display unit 402 to confirm that the wine bottle 2 is in a normal open state.

Specific examples of the content displayed by the external device 400 will be described below.

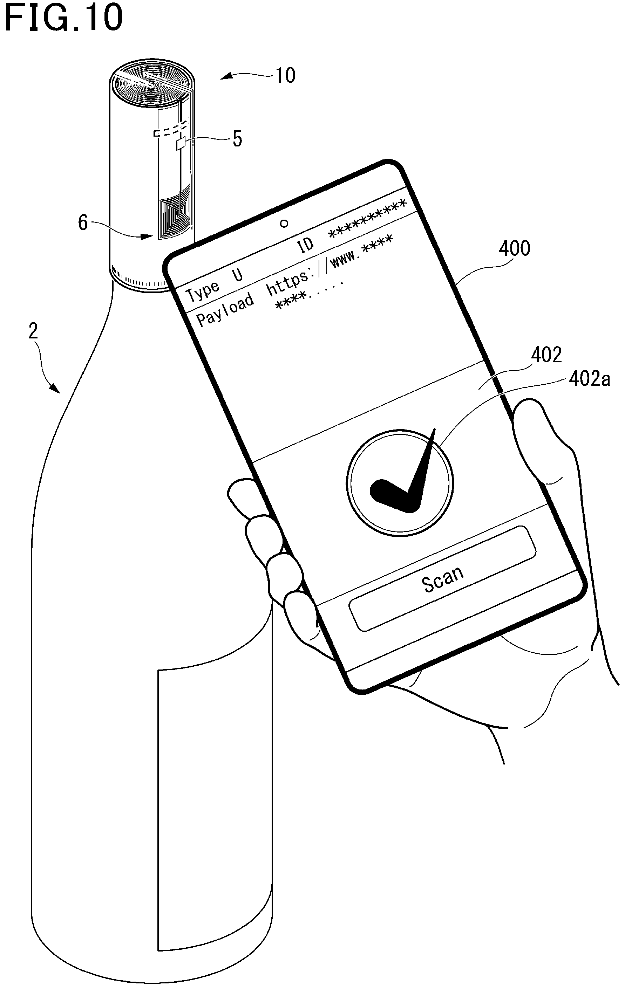

In the present embodiment, as shown in Fig. 10, when the external device 400 is brought closer to the IC chip 5, the identification information on the wine bottle 2 is displayed, for example, in an application that determines whether the wine bottle 2 has been opened by tampering. The display unit 402 of the external device 400 displays a model number (type), an ID, a URL for product information, an illustration 402a that indicates the presence or absence of opening by tampering, and the like.

The display unit 402 only needs to display at least the illustration 402a that indicates the presence or absence of opening by tampering.

When the wine bottle 2 has not been opened by tampering (is in a normal open state), as shown in Fig. 10, the display unit 402 displays, as the illustration 402a, a mark that allows the user to visually confirm that the wine bottle 2 is in a normal open state.

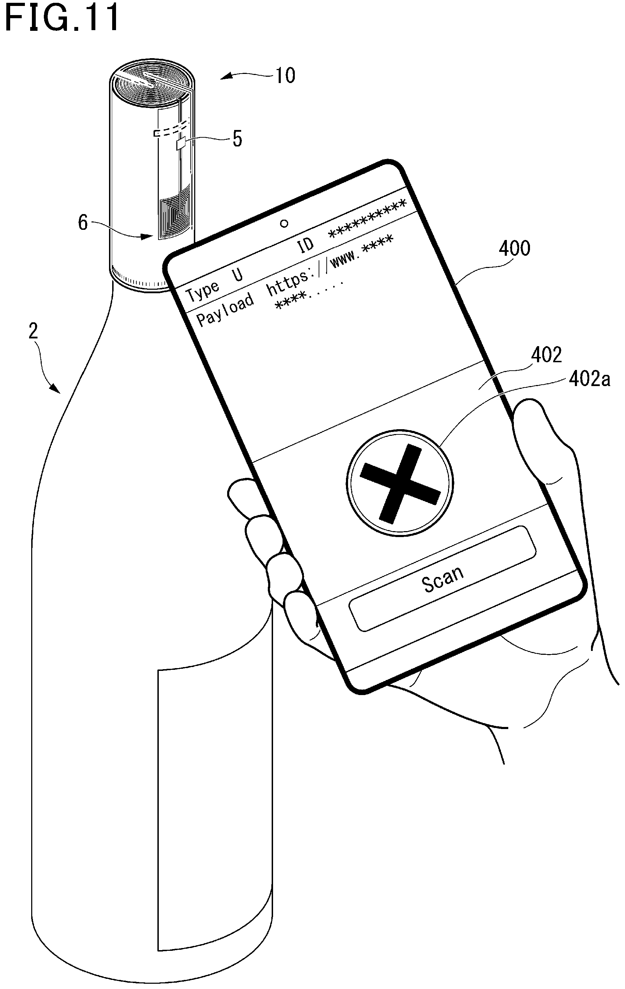

In contrast, when the wine bottle 2 has been opened by tampering (is in a tampered open state), as shown in Fig. 11, the display unit 402 displays, as the illustration 402a, a mark that allows the user to visually confirm that the wine bottle 2 is in a tampered open state.

When the IC chip 5 transmits the identification information on the wine bottle 2 to the external device 400, the control unit 406 of the external device 400 can cause the display unit 402 to display detailed information (e.g., production place, year, or the like) on the contents (wine) of the identification information. The user can check the display unit 402 to further confirm the detailed information on the wine bottle 2.

The external device 400 can transmit, to the IC chip 5, information input by the user via the input unit 401. Thus, the IC chip 5 can additionally record or update the acquired information. For example, the user can add information of the identification information and transmit the information to the IC chip 5. Furthermore, the user can cause the external device 400 to regularly communicate with the opening detection tag 1, and cause the IC chip 5 to record the time and location of communication and the state of the wine bottle 2 at that time in association with each other. Thus, when the wine bottle 2 has been opened by tampering, the tagged container 10 allows, via the external device 400, the user to narrow down, to some extent, the timing and location of the tampering act.

### [Online state]

Next, an effect of the opening detection system 200 in an online state will be described.

The user holds the external device 400, and brings the external antenna unit 404 closer to the antenna unit 6 of the opening detection tag 1. Then, power is supplied to the IC chip 5 of the opening detection tag 1 via the antenna unit 6, and the IC chip 5 can measure the electrostatic capacitance between the first electrode 41 and the second electrode 42, and transmit information on the measured value of the electrostatic capacitance or detection information to the external device 400. Furthermore, the IC chip 5 can transmit the identification information on the wine bottle 2 to the external device 400.

The communication unit 403 of the external device 400 in an online state manually or automatically transmits the received information to the server 300 via the network 900.

When the control unit 303 of the server 300 receives the information on the measured value of the electrostatic capacitance or the detection information and the identification information via the communication unit 301, the control unit 303 stores, in the storage 302, these types of information in association with other types of information. Specifically, the control unit 303 of the server 300 can detect, based on the information on the measured value, whether the opened state of the wine bottle 2 is the tampered open state or the normal open state, and generate detection information. Furthermore, for example, the control unit 303 of the server 300 can collect, based on the received identification information, detailed information (e.g., production place, year, or the like) on the contents (wine) of the wine bottle 2 of the identification information, the time at which the identification information is received (information indicating the time), the location in which the identification information is received (information indicating the position), other types of information on the wine bottle related to the identification information, and the like, and generate opening detection information. The control unit 303 can transmit the detection information or the opening detection information to the external device 400. The opening detection information may include the detection information.

The user can access, using the external device 400, the server 300 from the application via the network 900, and acquire the detection information or the opening detection information. When an email address is registered in advance in the application, the detection information or the opening detection information may be automatically transmitted to the external device 400 by email. The detection information or the opening detection information may be automatically transmitted using a push notification for the application of the external device 400.

The user can check the detection information or the opening detection information via the display unit 402. Thus, the user can check the opened state described above, and can also check, based on the opening detection information, for example, the type and number of products that have been opened by tampering, the type and number of products that have been opened in a normal manner, the time and location of opening of the products, or the like. For example, when the user is a shop staff member, the user can check the number of products opened in a normal manner, and determine, to some extent, the number of products to be ordered next time.

Thus, the opening detection system 200 according to the present embodiment allows the user to easily check the opened state using the external device 400 in both an online state and an offline state. Furthermore, the opening detection system 200 according to the present embodiment allows the user to acquire new information and prevent opening by tampering and promote sales.

The third embodiment of the present invention has been described in detail with reference to the drawings; however, specific configurations of the present invention are not limited to this embodiment, and also include design changes within the scope not departing from the gist of the present invention. The components described in the above embodiment and the following modifications can be appropriately combined.

### (Modifications)

For example, in the above embodiments, a cork-stopper type wine bottle is described as an example of the container used in the tagged container; however, the container is not specifically limited. The container may be a PET bottle, a beer bottle, a sake bottle, or the like. The cross-sectional shape of the container and the opening is not specifically limited, and may be a circular shape, a triangular shape, a rectangular shape, or any other shape. Furthermore, the size of the container is not specifically limited. The sealing portion is not limited to a cork stopper, and may be any member that seals the opening.

For example, in the above embodiments, wine that is liquid is described as the contents of the wine bottle; however, the contents may not necessarily be liquid.

The frequency band in which the opening detection tag according to the above embodiments perform communication is not limited to the UHF band as long as wireless communication can be performed in the frequency band, and the opening detection tag may perform communication in the HF band, the microwave band (approximately 2.45 GHz), or the LF band (135 kHz or less).

The opening detection tag according to the above embodiments may additionally include a component such as a protective mold, various resistors, a capacitor, a rectifying element, a surge suppressor, a power supply, a power generation element, a display unit, or a modularized electronic circuit.

The front-side connection portion and the back-side connection portion of the opening detection tag according to the above embodiments may extend across the lowermost end of the cover. With such a configuration, for example, even when a user removes the entire cover from the opening and the bottle neck and opens the wine bottle in a normal manner, the front-side connection portion and the back-side connection portion are disconnected, allowing the IC chip of the opening detection tag to detect that the wine bottle has been opened in a normal manner.

In any of the above embodiments, the opening detection tag and the tagged container according to the present invention make it possible to provide an opening detection tag and a tagged container capable of detecting that a hole has been formed in a sealing portion in an opening of a container and the contents of the container have been replaced by tampering.

### [Industrial Applicability]

The opening detection tag and the tagged container according to the present invention are capable of detecting that a hole has been formed in a sealing portion in an opening of a container and the contents of the container have been replaced by tampering, and thus are industrially applicable.

### [Reference Signs List]

10 Tagged container
2 Wine bottle (container)
20 Body portion
21 Bottle neck
22 Opening
23 Cork stopper (sealing portion)
24 Cover (cap seal)
24a Perforation
24b Opening portion
25 Injection needle hole
100 Tagged label
101 Label upper sheet
1, 1A, 1B, 1C Opening detection tag
11, 11A Front-side connection portion
12 Back-side connection portion
3 Substrate
4 Electrode
41, 41A First electrode
413, 413ANeedle detection unit
414, 414A First peripheral electrode portion
415 Through hole
42 Second electrode
422 Second peripheral electrode portion
423 Through hole
43 Third electrode
5 IC chip
6 Antenna unit
200 Opening detection system
300 Server
400 External device
900 Network

## Claims

1. An opening detection tag to be attached to a container having a sealing portion that seals an opening on an upper side of the container, the opening detection tag comprising:
a substrate having electrical insulation properties;
an electrode that is disposed on an upper side of the sealing portion and includes a first electrode that is provided on a front surface side of the substrate and a second electrode that is provided on a back surface side of the substrate and faces the first electrode;
an antenna unit that enables contactless communication with an external device; and
an IC chip that is electrically connected to the electrode and the antenna unit and measures electrostatic capacitance formed between the first electrode and the second electrode, wherein
the IC chip performs contactless communication with the external device via the antenna unit and transmits, to the external device, the electrostatic capacitance measured by the IC chip.

2. The opening detection tag according to claim 1, wherein
an outer diameter of the first electrode and an outer diameter of the second electrode are substantially equal as viewed in a thickness direction of the substrate.

3. The opening detection tag according to claim 1 or 2, wherein
the first electrode or the second electrode includes a detection unit that is composed of a conducting wire extending in a unicursal manner without intersecting.

4. The opening detection tag according to claim 3, wherein
the detection unit is provided in a region that overlaps with at least the opening as viewed in a thickness direction of the substrate.

5. The opening detection tag according to claim 4, wherein
the detection unit is composed of the conducting wire wound in a meandering shape or a spiral shape.

6. The opening detection tag according to claim 5, wherein
a pattern width of the conducting wire of the detection unit and a distance between two adjacent linear portions of the conducting wire are each 0.3 mm or less.

7. The opening detection tag according to claim 1 or 2, further comprising
a front-side connection portion that connects the first electrode to the IC chip, wherein
the first electrode includes a plurality of detection units each of which has a base end connected to the front-side connection portion and is composed of a conducting wire extending in a unicursal manner without intersecting, and
the plurality of detection units are provided so as not to overlap with each other in a region that overlaps with at least the opening as viewed in a thickness direction of the substrate.

8. The opening detection tag according to claim 1, further comprising
a front-side connection portion that connects the first electrode to the IC chip, wherein the first electrode includes a plurality of third electrodes,
the plurality of third electrodes include a plurality of detection units each of which is connected to the front-side connection portion and is composed of a conducting wire extending in a unicursal manner without intersecting, and
the plurality of detection units are provided so as not to overlap with each other in a region that overlaps with at least the opening as viewed in a thickness direction of the substrate.

9. The opening detection tag according to claim 1 or 2, wherein
the substrate is a PET substrate.

10. A tagged container comprising:
the opening detection tag according to claim 1 or 2; and
a container that has a sealing portion that seals an opening on an upper side of the container and to which the opening detection tag is attached.

11. The tagged container according to claim 10, wherein
the container includes a cover that covers a side surface of the container and the opening,
the cover has perforations that extend in a circumferential direction of the container and an opening portion that is surrounded by the perforations,
the opening detection tag further includes a front-side connection portion that connects the first electrode to the IC chip, and a back-side connection portion that connects the second electrode to the IC chip, and
the front-side connection portion and the back-side connection portion are provided across the perforations, and are attached to the opening portion.
